# EUROPEAN PATENT APPLICATION

(11) **EP 4 167 007 A1**
(43) Date of publication of application: **19.04.2023**
(21) Application number: 21826084.2
(22) Date of filing: 10.06.2021
(51) Int. Cl.: G02B 6/42, G02B 6/46

(54) **CONNECTOR MEMBER, OPTICAL TRANSMISSION SYSTEM, AND ASSEMBLY METHOD FOR SAME**

(30) Priority: 15.06.2020 JP 2020103269
(71) Applicant: Nitto Denko Corporation, Ibaraki-shi Osaka 567-8680 (JP)
(72) Inventor: TSUDA, Koichi, Ibaraki-shi, Osaka 567-8680 (JP); SHIMIZU, Yusuke, Ibaraki-shi, Osaka 567-8680 (JP)
(74) Representative: Hoffmann Eitle
(86) International application number: PCT/JP2021/022127
(87) International publication number: WO 2021/256373

(57) **Abstract**

A connector member (1) is configured to be optically connected to an optical cable (33) and to be connected to an output device-side connector (34) that fixes an output device-side end portion (40) of the optical cable (33). The connector member (1) includes a laser diode (6A) (photoelectric conversion portion (2)) configured to receive and emit an optical signal; a flexible light guide tube configured so that one end portion (17) of the light guide tube is optically connected to the laser diode 6A via an optical path conversion member (11), and so that the other end portion (18) of the light guide tube is optically connected to the optical cable (33); and a connector (4) that fixes the other end portion (18) of the light guide tube (3). The connector member (4) is configured to be connected to the output device-side connector (34). The connector 4 is capable of relative movement with respect to the laser diode 6A.

## Description

### TECHNICAL FIELD

The present invention relates to a connector member, an optical transmission system, and an assembly method for the same.

### BACKGROUND ART

Conventionally, an optical module including a photoelectric conversion element that is optically connected to an optical fiber has been known. Such an optical module is electrically connected to an external display device. An optical signal input from the optical fiber to the optical module is input to the photoelectric conversion element and is converted into an electrical signal at the photoelectric conversion element, and the electrical signal is input to the display device.

For example, an optical module including an optical element, a light guide member that is opposed to the optical element, and one housing that houses the optical element and the light guide member has been known (see, for example, Patent Document 1 below).

### Citation List

### Patent Document

Patent Document 1: Japanese Unexamined Patent Publication No. 2010-169819

### SUMMARY OF THE INVENTION

### PROBLEM TO BE SOLVED BY THE INVENTION

However, a connection port of the display device is usually in opposed relation to a wall and a space therebetween is narrow.

Meanwhile, in the optical module disclosed in Patent Document 1, since one housing houses two members, the optical element and the light guide member, it is large in size. Therefore, there is a disadvantage that the optical module disclosed in Patent Document 1 cannot be arranged in a narrow space.

The present invention provides a connector member that includes a photoelectric conversion portion and a connector each having high degree of freedom and can be disposed in a narrow space, an optical transmission system including the connector member, and an assembly method for the optical transmission system.

### MEANS FOR SOLVING THE PROBLEM

The present invention (1) includes a connector member configured to be optically connected to an optical cable and to be connected to a second connector that fixes one end portion of the optical cable, the connector member including: a photoelectric conversion portion configured to receive and emit an optical signal; a flexible light guide tube configured so that one end portion of the light guide tube is optically connected to the photoelectric conversion portion, and so that the other end portion of the light guide tube is optically connected to the optical cable; and a connector fixing the other end portion of the light guide tube, the connector configured to be connected to the second connector, in which the connector is capable of relative movement with respect to the photoelectric conversion portion.

In the connector member, since the connector fixes the other end portion of the flexible light guide tube and is capable of relative movement with respect to the photoelectric conversion portion, the photoelectric conversion portion and the connector have a high degree of freedom from each other. Therefore, the connector member can be disposed in a narrow space.

The present invention (2) includes the connector member described in (1), separately including a first case that houses the photoelectric conversion portion and the one end portion of the light guide tube; and a second case that houses the connector and the other end portion of the light guide tube.

According to the connector member, since the first case can protect the photoelectric conversion portion and the one end portion of the light guide tube, and the second case can protect the connector and the other end portion of the light guide tube, the connector member has high reliability. On the other hand, since the connector is capable of relative movement with respect to the photoelectric conversion portion, the second case can move relatively to the first case. Therefore, the first case and the second case have a high degree of freedom from each other. As a result, the connector member can be disposed in a narrow space while improving reliability.

The present invention (3) includes the connector member described in (1) or (2), in which a material of the light guide tube is glass.

The present invention (4) includes the connector member described in any one of the above-described (1) to (3), further including an optical path conversion unit located between the photoelectric conversion portion and one end portion of the light guide tube in an optical path.

The present invention (5) includes an optical transmission system, including a connector member described in any one of (1) to (4); a second connector that is connected to the connector of the connector member; and an optical cable of which end is fixed to the second connector and that is optically connected to the light guide tube of the connector member.

In the optical transmission system, the connector and the second connector are connected to securely and optically connect the light guide tube and the optical cable, so that the connector member can be disposed in a narrow space while improving optical connection reliability.

The present invention (6) includes the optical transmission system described in (5), in which the optical cable includes a plastic optical fiber.

In the optical transmission system, since the optical cable includes a plastic optical fiber, it has excellent bending resistance, and for this reason, it is possible to suppress breakage caused by bending at the time of laying the optical cable.

The present invention (7) includes an assembly method for an optical transmission system, the assembly method including the steps of: preparing a connector member described in any one of (1) to (4); fixing end portion of an optical cable by a second connector; connecting the connector of the connector member and the second connector to optically connect the light guide tube and the optical cable; and electrically connecting the photoelectric conversion portion and an electrical device.

According to the assembly method for the optical transmission system, the photoelectric conversion portion of the above-described connector member is electrically connected to the electrical device. Therefore, even though a space around a connection port of the electrical device is narrow, the photoelectric conversion portion can be connected to the connection port of the electrical device in such a narrow space because the photoelectric conversion portion and the connector have a high degree of freedom from each other.

### EFFECTS OF THE INVENTION

The connector member of the present invention can be disposed in a narrow space.

The optical transmission system of the present invention allows the connector member to be disposed in a narrow space while improving optical connection reliability.

The assembly method for the optical transmission system according to the present invention allows the photoelectric conversion portion to be connected to the connection port in the electrical device even in a narrow space.

### BRIEF DESCRIPTION OF THE DRAWINGS

FIG. 1 is a cross-sectional view of one embodiment of a connector member of the present invention.
FIG. 2 is a cross-sectional view of an optical transmission system including the connector member shown in FIG. 1.

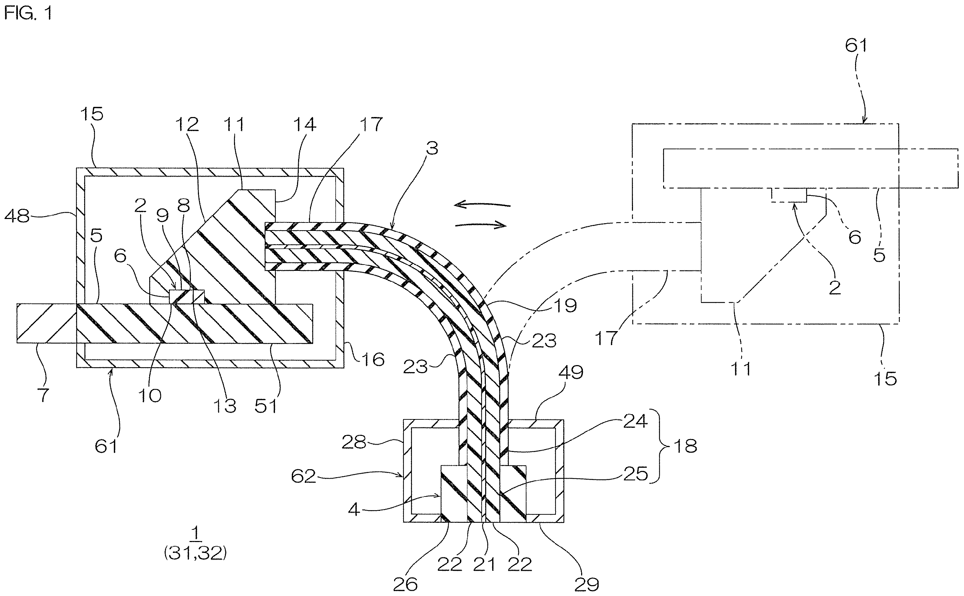

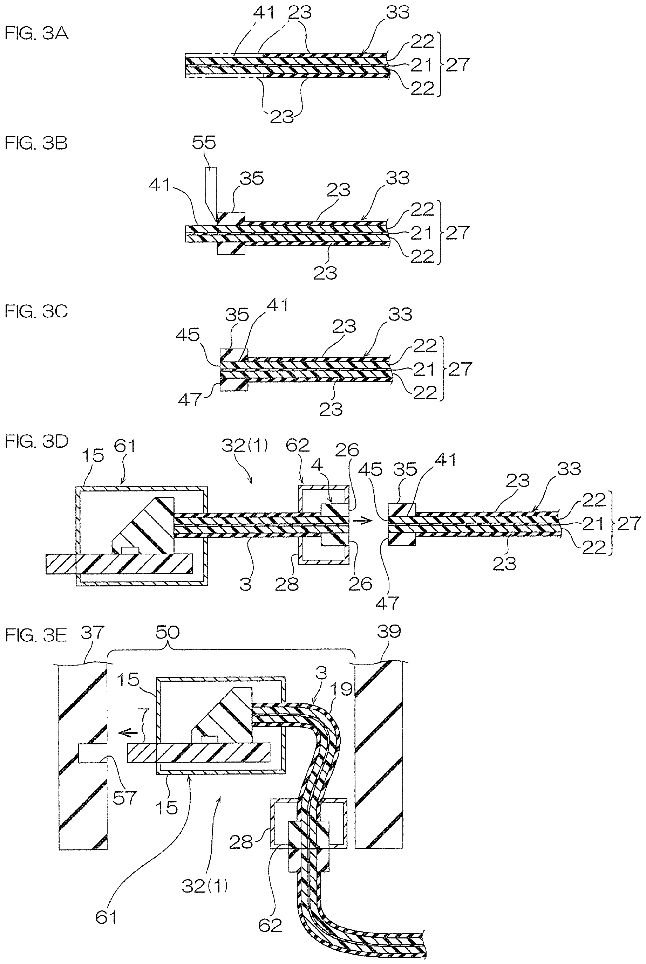

FIGS. 3A to 3E are process drawings illustrating an assembly method for the optical transmission system shown in FIG. 1: FIG. 3A illustrates a step of removing a coating layer at a video device-side end portion, FIG. 3B illustrates a step of holding a base end portion of the video device-side end portion by a video device-side connector, FIG. 3C illustrates a step of making the video device-side end portion and a third end surface flush with each other, FIG. 3D illustrates a step of connecting a connector and the video device-side connector, and disposing a first case and a second case in a space, and FIG. 3E illustrates a step of disposing the connector member in a space between a video device and a sixth wall.

### DESCRIPTION OF THE EMBODIMENTS

### <One embodiment of connector member>

One embodiment of the connector member of the present invention will be described with reference to FIG. 1.

### <Connector member>

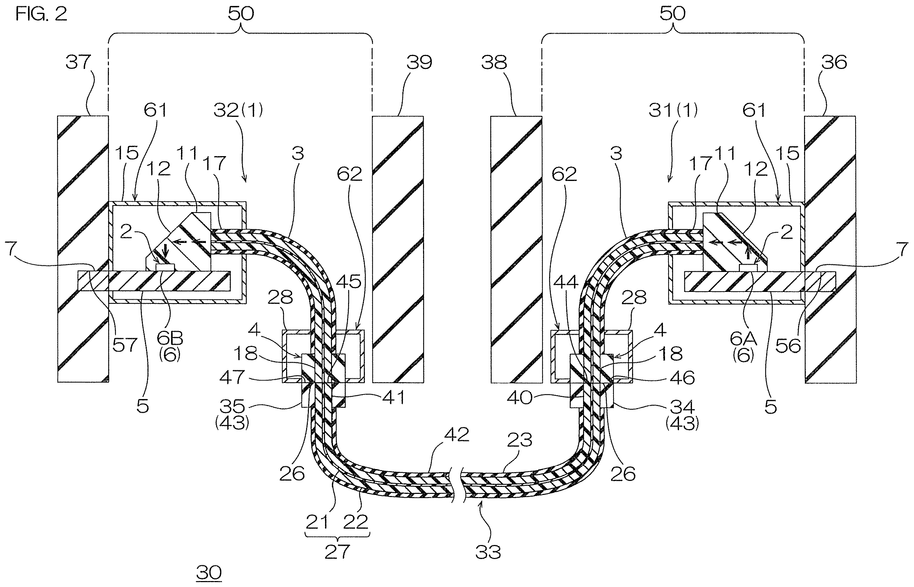

A connector member 1 is configured to be optically connected to an optical cable 33 (cf. FIG. 2) to be described later and to be connected to an output device-side connector 34 or a video device-side connector 35 (cf. FIG. 2) to be described later that fixes end portions 40 and 41 of the optical cable 33, respectively. Specifically, the connector 1 includes a device-side unit 61, a light guide tube 3, and a cable-side unit 62.

### <Device-side unit>

The device-side unit 61 is a unit to be connected to the output device-side connector 34 or the video device-side connector 35 (cf. FIG. 2). The device-side unit 61 includes a photoelectric conversion portion 2, an optical path conversion member 11, and a first case 15.

### <Photoelectric conversion portion>

The photoelectric conversion portion 2 includes a substrate 5 and a photoelectric conversion element 6.

The substrate 5 has a flat plate shape. The substrate 5 is, for example, a printed wiring board. The substrate 5 includes a support plate 51, a first terminal (not shown) disposed on one surface in the thickness direction of the support plate 51, and a second terminal 7 disposed on one side surface of the support plate 51. Examples of a material of the support plate 51 include hard resins such as epoxy resin. The second terminal 7 extends toward one side of the support plate 51.

The photoelectric conversion element 6 is configured to receive and emit an optical signal. Specifically, examples of the photoelectric conversion element 6 includes a photodiode (PD) capable of converting an optical signal input from an optical fiber 27 (to be described later) into an electrical signal and then outputting the electrical signal to the substrate 5; and a laser diode (LD) or a light emitting diode capable of converting an electrical signal input from the substrate 5 into an optical signal and then outputting the optical signal to the optical fiber 27 (to be described later). The photoelectric conversion element 6 includes an electrode (not shown) and a light receiving/emitting port 8. The electrode comes into contact with the first terminal (not shown) of the substrate 5. The light receiving/emitting port 8 is disposed in a first main surface 9 that is opposed at a spaced interval to a second main surface 10 in the thickness direction, the second main surface 10 being in contact with the substrate 5 in the photoelectric conversion element 6.

### <Optical path conversion member>

The optical path conversion member 11 covers the photoelectric conversion element 6. The optical path conversion member 11 has a mirror 12, a first surface 13, and a second surface 14, as an example of an optical path conversion unit.

The mirror 12 is opposed to the light receiving/emitting port 8. The mirror 12 is inclined at 45° relative to an optical axis of the light receiving/emitting port 8. The mirror 12 converts a path of light output from the photoelectric conversion element 6, or light input to the photoelectric conversion element 6, that is, an optical path.

The first surface 13 is opposed to the mirror 12. The first surface 13 includes an orthogonal surface that is orthogonal to the optical axis of the light receiving/emitting port 8.

The second surface 14 is also opposed to the mirror 12. The second surface 14 is parallel to the optical axis of the light receiving/emitting port 8. Specifically, the second surface 14 is orthogonal to one surface in the thickness direction of the support plate 51. An angle between the second surface 14 and the first surface 13 is 90°. One end portion 17 (to be described later) of the light guide tube 3 is opposed to the second surface 14. Thus, the mirror 12 is located between the photoelectric conversion element 6 and the one end portion 17 of the light guide tube 3 in the optical path.

Examples of a material of the optical path conversion member 11 include ceramic such as glass, and transparent resins such as epoxy resin and acrylic resin.

### <First case>

The first case 15 houses the substrate 5 except the second terminal 7; the photoelectric conversion element 6; and the optical path conversion member 11. The first case 15 has the substrate 5 fixed inside. The first case 15 has a square box shape. The first case 15 has a first wall 16 and a second wall 48. Each of the first wall 16 and the second wall 48 has a hole penetrating in the thickness direction.

The light guide tube 3 is inserted into the hole in the first wall 16 and then fixed therein. The second wall 48 is opposed at a spaced interval to the first wall 16. The end portion of the substrate 5 is inserted into the hole in the second wall 48 and then fixed therein. The size of the first case 15 is not particularly limited, and a side length thereof is, for example, 5 mm or more, preferably 10 mm or more, and for example, 40 mm or less, preferably 20 mm or less.

### <Light guide tube>

The light guide tube 3 is flexible. The light guide tube 3 has, for example, a generally circular shape in cross section orthogonal to the optical axis direction. The light guide tube 3 integrally has one end portion 17, the other end portion 18, and an intermediate portion 19 along a longitudinal direction.

The one end portion 17 is optically connected to the photoelectric conversion portion 2 via the optical path conversion member 11. Specifically, an end surface of the one end portion 17 is opposed to the second surface 14 of the optical path conversion member 11.

The one end portion 17 is housed in the first case 15. Specifically, the one end portion 17 is inserted in the hole in the first wall 16 of the first case 15. The one end portion 17 is fixed to the first wall 16. The one end portion 17 is not capable of relative movement with respect to the optical path conversion member 11 and the photoelectric conversion portion 2. The one end portion 17 is included in the device-side unit 61. A layer configuration of the one end portion 17 will be described later.

The other end portion 18 is disposed opposite to the one end portion 17 in the longitudinal direction of the light guide tube 3. That is, the other end portion 18 is located on an opposite side to the one end portion 17 with respect to the intermediate portion 19. The other end portion 18 is capable of relative movement with respect to the one end portion 17. The other end portion 18 is included in the cable-side unit 62. A layer configuration of the other end portion 18 will be described later.

The intermediate portion 19 is located between the one end portion 17 and the other end portion 18. The intermediate portion 19 has flexibility. The intermediate portion 19 allows communication between the device-side unit 61 and the cable-side unit 62. The intermediate portion 19 includes a core layer 21, a clad layer 22, and a coating layer 23.

The core layer 21 has a common optical axis with the light guide tube 3. The clad layer 22 comes into contact with a peripheral surface of the core layer 21 and coats the peripheral surface. The clad layer 22 has a lower refractive index than the core layer 21. Examples of materials of the core layer 21 and the clad layer 22 include ceramic such as glass, and transparent materials such as plastic, e.g., acrylic resin, epoxy resin, and the like. In the present embodiment, as the material of the core layer 21 and the clad layer 22, ceramic is preferably used, and glass is more preferably used. When the material of the core layer 21 and the clad layer 22 is a glass, an already available general-purpose component can be used.

The coating layer 23 comes into contact with a peripheral surface of the clad layer 22 and coats the peripheral surface. The coating layer 23 is a protective layer that protects the clad layer 22. Examples of a material of the coating layer 23 include a resin composition containing a light shielding component.

The one end portion 17 has the same layer configuration as the above-described intermediate portion 19.

The other end portion 18 has one side portion 24 adjacent to the intermediate portion 19, and the other side portion 25 including the other end surface. The one side portion 24 has the same layer configuration as the above-described intermediate portion 19. The other side portion 25 includes the core layer 21 and the clad layer 22, without including the above-described coating layer 23. Preferably, the other side portion 25 includes only the core layer 21 and the clad layer 22. The other side portion 25 is fixed to a connector 4 to be described later.

The core layer 21 has an outer diameter of, for example, 10 µm or more, preferably 30 µm or more, and for example, 120 µm or less, preferably 100 µm or less. The clad layer 22 has an outer diameter of, for example, 150 µm or more, preferably 200 µm or more, and for example, 1000 µm or less, preferably 700 µm or less. The coating layer 23 has an outer diameter of, for example, 1000 µm or more, preferably 2000 µm or more, and for example, 6000 µm or less, preferably 4000 µm or less. The one end portion 17 and the other end portion 18 each have a length of, for example, 5 mm or more, preferably 10 mm or more and, for example, 30 mm or less. The intermediate portion 19 has a length of, for example, 5 mm or more, preferably 10 mm or more and, for example, 150 mm or less.

### <Cable-side unit>

The cable-side unit 62 is a unit to be connected to the optical cable 33 (cf. FIG. 2). In the optical transmission system 30, the cable-side unit 62 is disposed at an opposite side to the device-side unit 61 with respect to the intermediate portion 19 of the light guide tube 3. The cable-side unit 62 includes the connector 4 and a second case 28.

### <Connector>

The connector 4 has, for example, a tubular shape. The connector 4 fixes the other end portion 18 of the light guide tube 3. Specifically, the connector 4 holds the other side portion 25 of the other end portion 18 from outside in the radial direction. The connector 4 has a first end surface 26 that is flush with the other end surface of the other end portion 18. The connector 4 fixes the other end portion 18 of the light guide tube 3 but does not fix the intermediate portion 19 of the light guide tube 3. Therefore, the connector 4 is capable of relative movement with respect to the first case 15 that fixes the one end portion 17 and to the photoelectric conversion portion 2 housed therein.

### <Second case>

The second case 28 houses the other end portion 18 of the light guide tube 3, and the connector 4. The second case 28 is separated from the first case 15. The second case 28 has a square box shape. The second case 28 has a third wall 29 and a fourth wall 49. Each of the third wall 29 and the fourth wall 49 has a hole penetrating in the thickness direction. The connector 4 is inserted into the hole in the third wall 29 and then fixed therein. The third wall 29 exposes the first end surface 26 of the connector 4. The one side portion 24 of the other end portion 18 is inserted into the hole in the fourth wall 49 and then fixed therein. Since the second case 28 houses the other end portion 18 of the light guide tube 3 and the connector 4, the second case 28 is capable of relative movement with respect to the first case 15 and the photoelectric conversion portion 2 (see phantom lines in FIG. 1). In short, the cable-side unit 62 is movable relatively to the device-side unit 61 (see phantom lines in FIG. 1). The size of the second case 28 is not particularly limited, and a side length thereof is, for example, 3 mm or more, preferably 5 mm or more, and for example, 20 mm or less, preferably 10 mm or less.

### <Production method for connector member>

The production method for the connector member 1 is not particularly limited. For example, the photoelectric conversion portion 2 and the light guide tube 3 are prepared. The optical path conversion member 11 is disposed on the substrate 5 so that the mirror 12 is in opposed relation to the photoelectric conversion element 6. The one end portion 17 of the light guide tube 3 is attached to the second surface 14 of the optical path conversion member 11.

The substrate 5 except the second terminal 7, the photoelectric conversion element 6, the optical path conversion member 11, and the one end portion 17 of the light guide tube 3 are housed in the first case 15. At this time, the substrate 5 is fixed in the hole in the second wall 48 of the first case 15, and the one end portion 17 is fixed in the hole in the first wall 16 of the first case 15. In this manner, the device-side unit 61 is fabricated.

The connector 4 is attached to the other side portion 25 of the other end portion 18 of the light guide tube 3. The connector 4 is fixed in the hole in the third wall 29 of the second case 28, and the one side portion 24 of the other end portion 18 is fixed in the hole in the fourth wall 49. In this manner, the cable-side unit 62 is fabricated.

Thus, the connector member 1 including the device-side unit 61, the light guide tube 3, and the cable-side unit 62 is produced.

### <Optical transmission system>

The optical transmission system 30 including the connector member 1 shown in FIG. 1 will be described with reference to FIG. 2.

The optical transmission system 30 includes one connector member 31, the other connector member 32, the optical cable 33, and two second connectors 43. The optical transmission system 30 connects an output device 36 as an example of an electrical device, and a video device 37 as an example of an electrical device.

### <Connector member>

The one connector member 31 is the same as the above-described connector member 1, except that the photoelectric conversion element 6 is a laser diode 6A. The other connector member 32 is substantially the same as the above-described connector member 1, except that the photoelectric conversion element 6 is a photodiode 6B and further has a control IC.

### <Optical cable>

The optical cable 33 is a cable that optically connects the light guide tube 3 of the one connector member 31 and the light guide tube 3 of the other connector member 32. The optical cable 33 has the same configuration as the light guide tube 3. The material of the core layer 21 and the clad layer 22 in the optical cable 33 is preferably plastic. In this case, the core layer 21 and the clad layer 22 forms a plastic optical fiber 27. When the optical cable 33 includes the above-described plastic optical fiber 27, it is possible to suppress breakage caused by bending of the optical cable 33 at the time of laying the optical cable 33, because the plastic optical fiber 27 has excellent bending resistance. The optical cable 33 has an output device-side end portion 40, a video device-side end portion 41, and a cable intermediate portion 42 along the longitudinal direction.

The output device-side end portion 40 includes an output device-side end surface 44. The output device-side end portion 40 is optically connected to the light guide tube 3 of the one connector member 31. Specifically, the output device-side end surface 44 comes into contact with the other end surface of the other end portion 18 of the light guide tube 3 of the one connector member 31. The optical axis of the output device-side end portion 40 is coincident with the optical axis of the other end portion 18 of the light guide tube 3 of the one connector member 31. The output device-side end portion 40 includes the core layer 21 and the clad layer 22, without including the coating layer 23. Preferably, the output device-side end portion 40 includes only the core layer 21 and the clad layer 22.

The video device-side end portion 41 is spaced apart from the output device-side end portion 40, and is, for example, disposed to be separated from the output device-side end portion 40 by at least a fifth wall 38 and a sixth wall 39 that are house walls where the output device 36 and the video device 37 are installed. The video device-side end portion 41 is disposed opposite to the output device-side end portion 40 in the longitudinal direction of the optical cable 33, and more specifically, located on an opposite side to the output device-side end portion 40 with respect to the cable intermediate portion 42. The video device-side end portion 41 includes the core layer 21 and the clad layer 22, without including the coating layer 23. Preferably, the video device-side end portion 41 includes only the core layer 21 and the clad layer 22.

The video device-side end portion 41 includes a video device-side end surface 45. The video device-side end portion 41 is optically connected to the light guide tube 3 of the other connector member 32. Specifically, the video device-side end surface 45 comes into contact with the other end surface of the other end portion 18 of the light guide tube 3 of the other connector member 32. The optical axis of the video device-side end portion 41 is coincident with the optical axis of the other end portion 18 of the light guide tube 3 of the other connector member 32.

The cable intermediate portion 42 is located between the output device-side end portion 40 and the video device-side end portion 41. The cable intermediate portion 42 is flexible and has an elastic behavior. The length of the cable intermediate portion 42 is not particularly limited and is, for example, 1 m or more, further 10 m or more and, for example, 1,000 m or less.

### <Second connector>

The two second connectors 43 are the output device-side connector 34 and the video device-side connector 35.

The output device-side connector 34 has, for example, a tubular shape. The output device-side connector 34 fixes the output device-side end portion 40 of the optical cable 33. The output device-side connector 34 holds the output device-side end portion 40 from outside in the radial direction. The output device-side connector 34 has a second end surface 46 that is flush with the other end surface of the output device-side end portion 40. The second end surface 46 comes into contact with the first end surface 26 of the one connector member 31. At this time, the output device-side connector 34 is connected to the connector 4 of the one connector member 31 by fitting of a pin and a groove, which are not shown, provided in the second end surface 46 and the first end surface 26, respectively.

The video device-side connector 35 has, for example, a tubular shape. The video device-side connector 35 fixes the video device-side end portion 41 of the optical cable 33. The video device-side connector 35 holds the video device-side end portion 41 from outside in the radial direction. The video device-side connector 35 has a third end surface 47 that is flush with the other end surface of the video device-side end portion 41. The third end surface 47 comes into contact with the first end surface 26 of the other connector member 32. At this time, the video device-side connector 35 is connected to the connector 4 of the other connector member 32 by fitting of a pin and a groove, which are not shown, provided in the third end surface 47 and the first end surface 26, respectively.

The output device 36 is, for example, opposed to the fifth wall 38 at an interval of a space 50. The output device 36 includes an output port 56 that faces the fifth wall 38. Examples of the output device 36 include video reproduction devices (or source devices) such as a DVD player and a BD player.

The video device 37 is, for example, opposed to the sixth wall 39 at an interval of a space 50. The video device 37 includes an input port 57 that faces the sixth wall 39. Examples of the video device 37 include image display devices such as a display.

The space 50 is a space between the output device 36 and the fifth wall 38, and is a narrow space between the video device 37 and the sixth wall 39. The length of the space 50 between the output device 36 and the fifth wall 38, and the length of the space 50 between the video device 37 and the sixth wall 39 are each, for example, 50 mm or less, further 30 mm or less and, for example, 10 mm or more.

### <Assembly method for optical transmission system>

Next, the assembly method for the optical transmission system 30 will be described with reference to FIGS. 1, 2, and 3A to 3D.

First, as referred to FIG. 1, one connector member 31 and the other connector member 32 are prepared.

Then, as referred to FIG. 2, the optical cable 33 is laid. The cable intermediate portion 42 of the optical cable 33 is inserted into a pipe or the like in a house. The output device-side end portion 40 is disposed near the output device 36. The video device-side end portion 41 is disposed near the video device 37.

Subsequently, as shown in FIG. 3A, the coating layer 23 in the video device-side end portion 41 is removed. The coating layer 23 in the video device-side end portion 41 is peeled off from the clad layer 22 with, for example, a stripper or the like. Though not shown in FIG. 3A, the coating layer 23 in the output device-side end portion 40 is also removed in the same manner as above.

Subsequently, as shown in FIG. 3B, a base end portion of the video device-side end portion 41 is held by the video device-side connector 35. Subsequently, as shown in FIG. 3B, a free end portion of the video device-side end portion 41 is removed with a cutting member 55 such as a cutter. Subsequently, as shown in FIG. 3C, the video device-side end surface 45 and the third end surface 47 are made flush with each other. In this manner, the video device-side end portion 41 is fixed with the video device-side connector 35. Though not shown in FIGS. 3B to 3C, the output device-side end portion 40 is fixed with the output device-side connector 34 in the same manner as above.

Subsequently, as indicated by an arrow in FIG. 3D, the connector 4 in the other connector member 32 and the video device-side connector 35 are connected to each other, so that the light guide tube 3 in the other connector member 32 and the video device-side end portion 41 of the optical cable 33 are optically connected. Specifically, the first end surface 26 of the connector 4 is brought into contact with the third end surface 47 of the video device-side end portion 41 to fit a pin (not shown) into a groove (not shown). At this time, the optical axis of the other side portion 25 of the light guide tube 3 is aligned with the optical axis of the video device-side end portion 41 of the optical cable 33.

In the same manner as above, the connector 4 in the one connector member 31 and the output device-side connector 34 are connected to each other, so that the light guide tube 3 in the one connector member 31 and the output device-side end portion 40 of the optical cable 33 are optically connected.

Thereafter, as shown in FIG. 3E, the other connector member 32 is disposed in the space 50 between the video device 37 and the sixth wall 39. At this time, the intermediate portion 19 of the light guide tube 3 is bent so as to prevent the first case 15 and the second case 28 from mutually interfering. More specifically, the first case 15 and the second case 28 are displaced from each other so that they are not overlapped when projected in a facing direction in which the video device 37 and the sixth wall 39 are opposed to each other. Subsequently, the second terminal 7 of the other connector member 32 is faced to the input port 57 of the video device 37. Thereafter, as referred to FIG. 2, the second terminal 7 is inserted into the input port 57. In this manner, the video device 37 is electrically connected to the photoelectric conversion portion 2 of the other connector member 32.

In the same manner as above, the second terminal 7 of the one connector member 31 is also inserted into the output port 56, so that the output device 36 is electrically connected to the photoelectric conversion portion 2 of the one connector member 31.

In this manner, the output device 36 and the video device 37 are connected to each other by the one connector member 31, the optical cable 33, and the other connector member 32.

Thus, the optical transmission system 30 is assembled.

In the optical transmission system 30, as referred to arrows in FIG. 2, an electrical signal output from the output port 56 of the output device 36 is input to the laser diode 6A via the substrate 5 of the one connector member 31. The laser diode 6A converts the electrical signal into an optical signal, and then irradiates the optical signal toward the mirror 12. The optical path of the optical signal is changed by the mirror 12, and the optical signal is then input to the light guide tube 3. Thereafter, the optical signal is input from the light guide tube 3 to the optical cable 33. The optical signal is then input from the optical cable 33 to the light guide tube 3 of the other connector member 32. The optical path of the optical signal is changed by the mirror 12. Thereafter, the optical signal is input to the photodiode 6B. The photodiode 6B converts the optical signal into an electrical signal, and then inputs the electrical signal to the video device 37 via the substrate 5.

### <Function and effect of one embodiment>

In the connector member 1, since the connector 4 fixes the other end portion 18 of the flexible light guide tube 3 and is capable of relative movement with respect to the photoelectric conversion portion 2, the photoelectric conversion portion 2 and the connector 4 have a high degree of freedom from each other. Therefore, the connector member 1 can be disposed in the narrow space 50.

According to the connector member 1, since the first case 15 can protect the photoelectric conversion portion 2 and the one end portion 17 of the light guide tube 3, and the second case 28 can protect the connector 4 and the other end portion 18 of the light guide tube 3, the connector member 1 has high reliability. On the other hand, since the connector 4 is capable of relative movement with respect to the photoelectric conversion portion 2, the second case 28 can move relatively to the first case 15. Therefore, the first case 15 and the second case 28 have a high degree of freedom from each other. As a result, the connector member 1 can be disposed in the narrow space 50 while improving reliability.

In the optical transmission system 30, the connector 4 in the one connector member 31 and the output device-side connector 34 are connected to securely and optically connect the light guide tube 3 in the one connector member 31 and the optical cable 33, so that the one connector member 31 can be disposed in the narrow space 50 corresponding to the output device 36 while improving optical connection reliability.

In addition, in the optical transmission system 30, the connector 4 in the other connector member 32 and the video device-side connector 35 are connected to securely and optically connect the light guide tube 3 in the other connector member 32 and the optical cable 33, so that the other connector member 32 can be disposed in the narrow space 50 corresponding to the video device 37 while improving optical connection reliability.

According to the assembly method for the optical transmission system 30, the laser diode 6A of the one connector member 31 is electrically connected to the output device 36. Therefore, even though the space 50 corresponding to the output device 36 is narrow, the laser diode 6A can be electrically connected to the output device 36 in such space because the laser diode 6A and the connector 4 have a high degree of freedom from each other.

In addition, according to the assembly method for the optical transmission system 30, the photodiode 6B of the other connector member 32 is electrically connected to the video device 37. Therefore, even though the space 50 corresponding to the video device 37 is narrow, the photodiode 6B can be electrically connected to the video device 37 in such space because the photodiode 6B and the connector 4 have a high degree of freedom from each other.

### <Modified Examples>

In the following modified examples, the same reference numerals are provided for members and steps corresponding to each of those in one embodiment described above, and their detailed description is omitted. Further, the modified examples can achieve the same function and effect as that of one embodiment unless otherwise specified. Furthermore, one embodiment and the modified example thereof can be appropriately used in combination.

Each of the core layer 21 and the clad layer 22 in the light guide tube 3 may be plural in number.

Each of the core layer 21 and the clad layer 22 in the optical cable 33 may be plural in number. The optical cable 33 may further include an electric wire or wires (not shown) to be coated with the coating layer 23. In this case, the optical cable 33 is an optical electric hybrid cable, and a conductive wire (not shown) to be connected to the above-described electric wire or wires is accompanied with the light guide tube 3. The conductive wire is directly connected to the substrate 5 without interposing the optical path conversion member 11.

The device-side unit 61 of the one connector member 31 may further include a photodiode 6B, in addition to the laser diode 6A. In this case, the cable-side unit 62 of the other connector member 32 may further include a laser diode 6A, in addition to the photodiode 6B. Thus, a bidirectional optical communication between the device-side unit 61 and the cable-side unit 62 is implemented.

While the illustrative embodiments of the present invention are provided in the above description, such is for illustrative purpose only and it is not to be construed restrictively. Modification and variation of the present invention that will be obvious to those skilled in the art is to be covered by the following claims.

### Industrial Applicability

A connector member is included in an optical transmission system. Description of Reference Numerals

- 1: connector member
- 2: photoelectric conversion portion
- 3: light guide tube
- 4: connector
- 15: first case
- 17: one end portion
- 18: the other end portion
- 27: plastic optical fiber
- 28: second case
- 30: optical transmission system
- 31: connector member
- 32: connector member
- 33: optical cable
- 34: output device-side connector (an example of the second connector)
- 35: video device-side second connector (an example of the second connector)
- 40: output device-side end portion
- 41: video device-side end portion
- 43: second connector

## Claims

1. A connector member configured to be optically connected to an optical cable and to be connected to a second connector that fixes one end portion of the optical cable, the connector member comprising:
a photoelectric conversion portion configured to receive and emit an optical signal;
a flexible light guide tube configured so that one end portion of the light guide tube is optically connected to the photoelectric conversion portion, and so that the other end portion of the light guide tube is optically connected to the optical cable; and
a connector fixing the other end portion of the light guide tube, the connector configured to be connected to the second connector,
wherein the connector is capable of relative movement with respect to the photoelectric conversion portion.

2. The connector member according to claim 1, separately comprising:
a first case that houses the photoelectric conversion portion and the one end portion of the light guide tube; and
a second case that houses the connector and the other end portion of the light guide tube.

3. The connector member according to claim 1 or 2, wherein a material of the light guide tube is glass.

4. The connector member according to claim 1 or 2, further comprising an optical path conversion unit located between the photoelectric conversion portion and one end portion of the light guide tube in an optical path.

5. The connector member according to claim 3, further comprising the optical path conversion unit located between the photoelectric conversion portion and one end portion of the light guide tube in an optical path.

6. An optical transmission system, comprising:
a connector member according to any one of claims 1 to 5;
a second connector that is connected to the connector of the connector member; and
an optical cable of which end is fixed to the second connector and that is optically connected to the light guide tube of the connector member.

7. The optical transmission system according to claim 6, wherein the optical cable comprises a plastic optical fiber.

8. An assembly method for an optical transmission system, the assembly method comprising the steps of:
preparing a connector member according to any one of claims 1 to 5;
fixing end portion of an optical cable by a second connector;
connecting the connector of the connector member and the second connector to optically connect the light guide tube and the optical cable; and
electrically connecting the photoelectric conversion portion and an electrical device.
